**Europäisches Patentamt**

**European Patent Office**

**Office européen des brevets**

(19)

(11) Publication number : **0 611 066 A1**

# (12) EUROPEAN PATENT APPLICATION

(21) Application number : **94300573.6**

(22) Date of filing : **26.01.94**

(51) Int. Cl.⁵ : **B01D 15/02, B01J 47/12**

(30) Priority : **09.02.93 GB 9302547**

(43) Date of publication of application :
**17.08.94 Bulletin 94/33**

(84) Designated Contracting States :
**AT BE CH DE DK ES FR GB GR IE IT LI LU MC NL PT SE**

(71) Applicant : **AGRICULTURAL & FOOD RESEARCH COUNCIL**
**Institute of Food Research,**
**Earley Gate,**
**Whiteknights Road**
**Reading, Berkshire RG6 2EF (GB)**

(72) Inventor : **Niven, Gordon W.**
**59 Foxhill Road**
**Reading, Berkshire RG1 5QF (GB)**
Inventor : **Scurlock, Peter**
**Little Orchard,**
**Croft Road,**
**Spencers Wood**
**Reading, Berkshire RG7 1DR (GB)**
Inventor : **Andrews, Anthony T.**
**Tudor Cottage,**
**Bramley Lane,**
**Bramley**
**Nr. Basingstoke, Berkshire RG26 5AE (GB)**

(74) Representative : **Bassett, Richard Simon et al**
**ERIC POTTER & CLARKSON**
**St. Mary's Court**
**St. Mary's Gate**
**Nottingham NG1 1LE (GB)**

(54) Continuous separation and purification of materials.

(57) A non-particulate carrier is provided which is adapted to reversibly bind a desired material, which may either be the desired end product material, or a contaminant which is removed from the desired end product material. The carrier is arranged to pass sequentially through a feedstock liquid containing the material to be purified where the desired material is adsorbed to the carrier, a wash liquid, a desorption liquid into which the material is desorbed by the carrier and a further wash liquid. The carrier is preferably a non-absorbent natural or synthetic polymer and is conveniently in the form of an endless belt. An agent which will reversibly bind the desired material may be chemically attached to the carrier, and binding of the material to the carrier or binding agent be by biospecific affinity, hydrophobic or ionic interactions.

FIGURE 1

EP 0 611 066 A1

This invention relates to a method and apparatus for the continuous separation and purification of material. It is particularly suitable for, although not limited to, the separation and purification of biological material, especially proteins.

Separations are a fundamental requirement of most biotechnological processes, whether this takes the form of biocatalyst isolation, feedstock preparation or product purification. As downstream processing can account for a substantial proportion of the cost of a biotechnological product (Dwyer, 1984) the development of efficient large-scale separation techniques is essential, particularly for the purification of low-value/high volume products.

The most commonly used methods in commercial bioseparations, such as precipitation, column chromatography and batch adsorption, are discontinuous processes. In liquid chromatography for example, much of the process time is spent on column equilibration, regeneration and cleaning. Continuous separation processes are attractive as they are less labour-intensive and are easily controllable. In addition, many bioreactor systems for the production of biotechnological products operate in continuous mode. These may therefore be complemented by the development of continuous downstream processes which will ease process integration and increase efficiency.

Various attempts have been made to develop continuous chromatography processes for the separation of organic chemicals, but these tended to be technically complex and have a low degree of selectivity (Sussman, 1976). Continuous separations may be simulated by using a series of chromatography columns in synchronisation so that elution from each column occurs sequentially (Nicoud, 1992). Huang *et al* (1986) applied this simulated moving bed method to the affinity separation of proteins.

Affinity interactions are among the most powerful bioseparation tools due to their specificity. Continuous affinity separation processes have been devised which physically cycle adsorbent between adsorbing and desorbing environments (Hughes & Charm, 1979; Burns & Graves, 1985; Pungor *et al*, 1987). However, a problem exists in using conventional particulate affinity matrices in this way, namely the development of a means of isolating the adsorbent from one liquid medium and transferring it to another.

Burns and Graves used a magnetically stabilized fluidized bed in which magnetically susceptible solid particles containing an affinity ligand are continually transferred between a first magnetized column through which the mixture containing the desired material for separation is flowing, and a second magnetized column through which a desorbing medium is flowing. Pungor *et al* used affinity beads which were continuously pumped between filtration vessels containing the material for purification and the desorption medium.

Hughes and Charm used affinity beads which were contained in porous nylon pouches fixed to a continuous belt. The belt was arranged to pass through chambers containing the material for purification, wash solutions and the desorption media.

All of the above methods use beaded chromatography matrices. We have now surprisingly found that by using a non-particulate carrier which is adapted to reversibly bind a material, a much faster recycle rate can be achieved thus providing a more efficient continuous separation method.

By conventional wisdom, adsorptive separations methods require a large surface area in order to achieve a high binding capacity. Consequently, porous beads have been used for this purpose. However, the movement of solute into the porous structure is usually by the relatively slow process of diffusion and so a long contact time is required between the solid and liquid phases. The present invention seeks to overcome this problem by using a non-porous absorbent surface which enables repaid adsorption and desorption to be achieved. In a continuous process, the resulting low surface area for binding is compensated by the rapid recycling of the ligand.

The present invention provides apparatus for the continuous separation and purification of a material comprising a non-particulate carrier which is adapted to reversibly bind a desired material and a plurality of liquid containers through which the carrier is arranged to pass sequentially.

In a further aspect, the invention provides a method for the continuous separation and purification of a material comprising providing a non-particulate carrier which is adapted to reversibly bind a desired material and passing the carrier sequentially through a feedstock liquid containing at least one material to be purified, where the material is adsorbed to the carrier, a wash liquid, at least one desorption liquid into which the material is desorbed by the carrier and a further wash liquid.

The desired material bound by the carrier may either be the desired end product, or it may be a contaminant. Thus the method and apparatus of the invention can be used to separate and purify the desired end product material either by removing that material from the feedstock liquid by reversibly binding that material to the carrier, or by removing contaminants from the feedstock material by reversibly binding them to the carrier to leave a pure feedstock liquid as the desired end product material.

In a still further aspect, the invention provides a non-particulate carrier which is adapted to reversibly bind a material for use in the above apparatus and method.

Continuous separation and purification of the material is achieved by movement of the carrier through the liquid media combined with the flow of liquid through the liquid containers.

Any type of adsorption and desorption separation strategy may be used with the method and apparatus of the invention. Suitable strategies include interactions between the target material and an affinity ligand or specific antibody, an ion-exchange process or a hydrophobic interaction.

The carrier material should preferably be either a material which is capable of reversibly binding a desired material or a material which is easily derivatizable to make it capable of binding. Alternatively, the carrier may be coated with a material which can be derivatized. The carrier is preferably a natural or synthetic polymer which desirably is non-absorbent. Nylon or cellulose are especially suitable. Suitable coating materials include polyacrylamide, agarose, dextran and gelatin.

Conveniently an agent which is capable of reversibly binding a material is chemically attached to the carrier, or to the coating material. The binding agent can be a specific affinity ligand such as an antibody raised against the target material, protein A for binding immunoglobulins, enzyme substrates, cofactors and reversible inhibitors, and dye compounds, for example Cibacron blue, for binding dehydrogenase enzymes. ("Cibacron" is a registered trademark.) For separations based on ion-exchange mechanisms the binding agent is a charged group, for example a diethylaminoethyl- (DEAE-) group or a carboxymethyl- (CM-) group. For hydrophobic interactions the binding agent is for example a linear aliphatic chain or a phenyl group. However, any suitable binding agent can be used which will specifically reversibly bind the desired material to be removed from the feedstock liquid.

The binding agent can also be used to remove contaminants from the feedstock liquid, for example it may be used to remove pesticides from a water supply or in effluent treatment to remove heavy metals.

Use of a non-particulate carrier does not necessarily provide a large surface area for binding of the material. However, contact time between the solid and liquid phases is not dependent on particle mixing or diffusion into the carrier matrix and thus rapid recycling of the binding surface is possible.

Preferably the non-particulate carrier is an endless belt, and the resulting flow of liquid over the carrier may be important in achieving the fast association and dissociation of material with the carrier.

The binding agent may be chemically attached to the carrier by any suitable method. The particular method chosen will vary depending on the particular carrier material and binding agent to be used. Attachment may be mediated for example by gluteraldehyde, cyanogen bromide, bis-oxiranes and carbodiimidazole.

Advantageously the agent is bound to the carrier by a chemical spacer and preferred spacers are polyethylenimine, polylysine, polyglutamic hydrazide and polyacrylic hydrazides.

More than one material may be separated from a feedstock liquid by using a carrier which is adapted to reversibly bind all of the materials to be purified. A plurality of desorption liquids are provided, each of which selectively desorbs one of the materials from the carrier as the carrier passes through.

A preferred embodiment of the invention will now be described with reference to the accompanying drawings in which;-

Figure 1 is a diagrammatic representation of preferred apparatus in accordance with the invention;

Figure 2 shows the activities of trypsin in the adsorption chamber (O) and the desorption chamber (●) during continuous operation using bovine pancreatic extract.

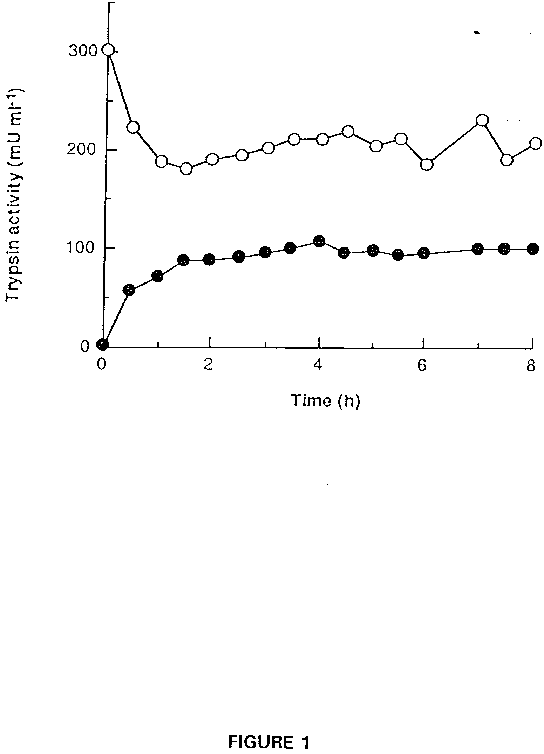

Referring to Figure 1, apparatus in accordance with the invention comprises a tank 1 which comprises four liquid chambers 2. Each chamber 2 contains an insert 3 which fits into a rebate in the chamber wall. A nylon belt 4 passes through each of the chambers 2 via upper rollers 5 fitted to the partitions between the chambers, and lower rollers 6 fitted to the bottom of the inserts 3. The rollers 5, 6 ensure a smooth passage of the belt 4. The belt 4 is driven by a drive wheel 7 attached to an electric stepper motor. Tension of the belt is maintained by a tension arm and roller arrangement 8. Inflow and outflow ports 9,10 are situated near the top of each chamber 2 at opposite sides of the insert 3 and are connected to reservoirs of the appropriate liquid via peristaltic pumps.

The direction of rotation of the drive wheel 7 and thus the direction of movement of the belt 4 is indicated by the arrow R. In use, the belt 4 passes sequentially through the liquid chambers 2 from left to right as shown in Fig.1. The chamber on the left, the adsorption chamber, contains feedstock liquid containing the material which is to be purified and the belt 4 passes through this chamber first. The next chamber contains a wash liquid, the next chamber, the desorption chamber, contains a desorption liquid into which the material bound by the carrier is released from the carrier and the last chamber another wash liquid, the belt passing sequentially through these chambers.

During passage of the belt through the adsorption chamber, the material to be removed from the feedstock liquid binds to the carrier. The material is then washed during passage of the belt through the next chamber. In the desorption chamber, the bound material is released into the desorption liquid. The carrier is then washed and regenerated for use again as the belt passes through the last chamber. Thus a continuous purification process is provided with different parts of the belt passing through different stages of the process simultaneously.

The adsorption and desorption of the material is controlled by the composition of the liquid media flowing through each chamber. In the adsorption and wash chambers the liquid composition is such that the binding to the carrier of the material is facilitated. The composition of the media in the desorption chamber is such that the bound material is desorbed from the carrier.

In an alternative embodiment where it is desired to remove more than one material from the feedstock liquid, a desorption chamber is provided for each of the materials removed and bound to the carrier. As the carrier passes through the desorption chambers, a step wise desorption from the carrier of each of the different materials bound is obtained. Thus the method and apparatus can be used to simulataneously separate several desired product materials from one feestock liquid, each product being desorbed into a different desorption chamber. Alternatively several different contaminants can be removed from a feedstock liquid which it is desired to purify.

For example, in an ion-exchange process, a first desorption may remove contaminants eluting with 0.2M salt so that the product can be isolated at 0.4M salt free of these contaminants. A final desorption at 1M salt then removes the remaining contaminants before the regeneration step.

It has been found that the various operational parameters such as belt speed and the liquid flow through the chambers affect the efficiency of the process. The mechanical transfer of liquid from one chamber to the next (carryover) may also be found to influence process efficiency. It is a matter of routine experimentation for the person skilled in the art to select optimum values of the parameters according to the particular material to be purified, the operation strategy employed, and the scale of the apparatus being used.

It has been demonstrated experimentally that the relationship between the concentration of the target compound in the adsorption chamber and the rate of transfer to the desorption chamber is such that

$$\text{transfer} = M \times \text{conc} / (K + \text{conc})$$

where $M$ is the binding capacity of the belt and $K$ is an equilibrium constant. Using these constants it is therefore possible to determine the most advantageous feedstock concentration and flow rate.

Assuming that the feedstock concentration is capable of saturating the belt, the relationship between the contact time of the belt and liquid medium will be determined by a time constant, i.e. there will be a belt speed which provides maximum transfer of product. Operating above this speed will offer no advantage and will increase carry over, while operating below it will reduce the product transfer rate.

Another equilibrium constant will determine the relationship between the carrier-bound product and the concentration in free solution in the desorption chamber. A high accumulation of product in the desorption chamber will limit the ability of the desorption process to take place. In addition, high product concentrations increase the amount of material lost by carry over into the regeneration chamber. These factors mean that the most efficient way to operate the apparatus is with as high a flow rate of desorption buffer as possible. However, this must be balanced against the need to concentrate the product for assay and further use. Large volumes of dilute product can be difficult and expensive to handle.

High flow rates of wash media also give the most effective operation. A certain amount of wash medium is transferred by carry over into the desorption chamber. If the concentration of unwanted material in the wash medium is allowed to build up, the amount which will contaminate the product increases. This effect is greater at high belt speeds which give higher carry over rates.

The limitation of carry over is important for high efficiency of operation of the apparatus. High binding capacity per unit surface area also gives efficient operation.

The method and apparatus of the invention will now be further described with reference to the following example.

Example 1

The method and apparatus of the invention was tested using soybean trypsin inhibitor as an affinity ligand for the specific adsorption of trypsin, and using changes in pH of the liquid media to control the adsorption and desorption processes.

The specific affinity transfer of trypsin under continuous operation was investigated using a preparation of bovine pancreatic acetone powder as feedstock.

Bovine pancreas acetone powder (Sigma, product number P3006) was suspended at 100 mg ml$^{-1}$ in 50 mM tris (hydroxymethyl) methylamine (Tris)/HCl, pH 8 containing 20 mM CaCl$_2$ and 100 mM NaCl. This was stirred for 30 min at 5°C. A substantial amount of insoluble material was removed by centrifugation at 3000 x g for 30 min at 5°C.

The first wash medium was unbuffered distilled water, the desorption medium was 100 mM glycine/HCl, pH 2.3, and the second wash medium was 50 mM Tris/HCl, pH 8. In addition, all solutions contained 20 mM CaCl$_2$ and 100 mM NaCl.

Before the start of each run, the adsorption chamber was filled with diluted crude material containing 300 mU ml$^{-1}$ trypsin. Thereafter, feedstock containing 1160 mU ml$^{-1}$ trypsin was added at a flow rate of 0.25 ml min$^{-1}$. A desorption medium flow rate of 0.5 ml min$^{-1}$ was initiated 30 min after the start of the run. The belt speed was 1 m min$^{-1}$ and the wash media flow rates were 10 ml min$^{-1}$. Occasional man-

ual adjustments of pH in the adsorption and desorption chambers were required. At all times, the pH was maintained between 7.5-8.0 in the adsorption chamber and between 2.3-2.8 in the desorption chamber.

## Attachment of soybean trypsin inhibitor (SBTI) to nylon belts

SBTI was covalently attached to nylon 66 belts by a modification of the method of Andrews and Mbafor (1991). Nylon tape (4 cm wide) was obtained from A R Horwell, London. Continuous belts 190 cm long were formed by heat sealing the cut ends. Nylon was activated by partial hydrolysis in 2.5 M HCl for 16 h. SBTI was attached to activated nylon via a polyethylenimine spacer using gluteraldehyde mediated attachment. The belt was incubated at 20°C in the following solutions: 5% (v/v) gluteraldehyde, 5 h; 5% (v/v) polyethylenimine, 16 h; 5% (v/v) gluteraldehyde, 5 h; 1 mg ml$^{-1}$ SBTI, 16 h; 2% (v/v) ethanolamine, 5 h. Each reagent was prepared in 0.1 M potassium phosphate buffer, pH 8 and the belt was thoroughly washed in distilled water between each step.

## Trypsin determination

Trypsin was assayed by measuring the hydrolysis of N$\alpha$-benzoyl-DL-arginine p-nitroanilide (BAPNA) (Haverback et al 1960). Duplicate reaction mixtures containing 50 mM Tris/HCl, pH 8, 20 mM CaCl$_2$, 0.1 mM BAPNA and 0.1 ml trypsin solution in 0.8 ml were incubated at 37°C for 20 min. Over this time the reaction rate was linear. The reaction was stopped by the addition of 0.8 ml 30% (v/v) acetic acid. Each sample was centrifuged for 10 min at 10000 x g. The absorbence of 410 nm was then measured and the p-nitroanilide concentration was calculated using a molar extinction coefficient of 8800 M$^{-1}$ cm$^{-1}$. One unit of trypsin activity was defined as the amount of enzyme required to produce 1 $\mu$mol p-nitroanilide in 1 min under the conditions described above.

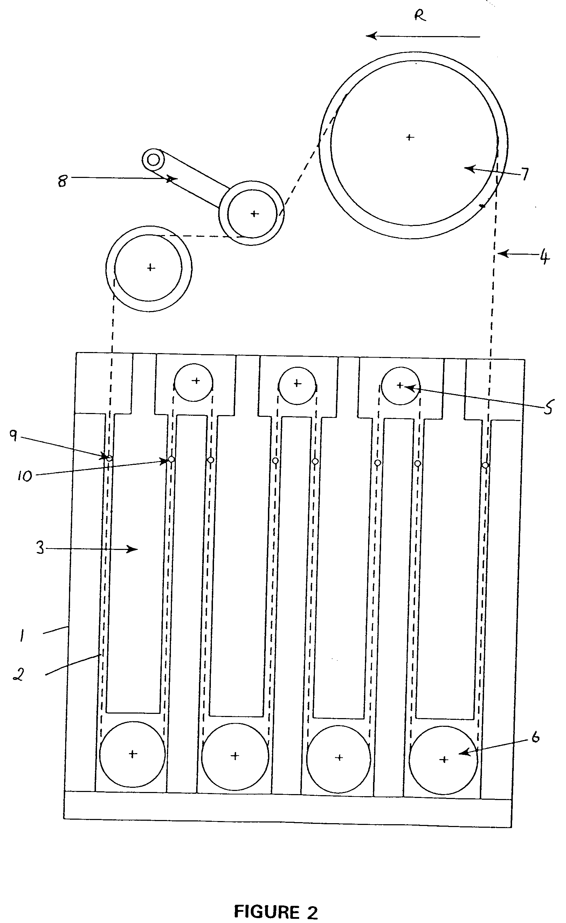

The concentrations of trypsin in the adsorption and desorption chambers in the course of this experiment are shown in Fig 2. The trypsin concentrations in each chamber reached steady-state after approximately 1.5 h and this was maintained for a further 6.5 h with no apparent deterioration of the belt transfer capacity. The average concentrations of trypsin in the adsorption and desorption chambers at steady-state were 213 mU ml$^{-1}$ and 97 mU ml$^{-1}$, respectively. The value of the transfer capacity of the belt used in this experiment was 1150 mU m$^{-2}$.

The specific activities of trypsin were estimated by calculating the trypsin activity in mU ml$^{-1}$ divided by the absorbence at 280 nm using a 1 cm pathlength. The mean specific activity of trypsin in the eluent stream during steady-state was 214 mU (A$_{280}$)$^{-1}$ and this value was maintained throughout the steady-state period. The specific activity of trypsin in the feedstock was 67 mU (A$_{280}$)$^{-1}$ and so it is apparent that trypsin enrichment was achieved on a continuous basis using this apparatus.

Nylon was selected as a suitable material for the ligand carrier belt as it was non-absorbent which helped to reduce the mechanical transfer of liquid between the chambers, and it was readily derivatizable after partial hydrolysis. By the derivatization procedure described above, belts of an apparent trypsin transfer capacity of approximately 1000-2000 mU m$^{-2}$ were obtained.

As all phases of the affinity separation occur simultaneously on different portions of the belt, the separation process does not have to stop for regeneration or cleaning of the adsorbent carrier. It may even be possible to replace the belt during operation without interrupting the separation process. Unlike batch-mode separations, the continuous separation process can be monitored and controlled in real-time. This introduces the possibility of process automation and computer control which would allow the production of a constant stream of product of predictable and controllable quality. This would be of considerable benefit for process validation and quality assurance.

In this technique, the feedstocks are not passed through a porous affinity matrix and so fouling by particulate material is not a major problem. This method can therefore be applied to crude materials with little preliminary processing.

In prior art adsorptive separation processes, efficiency is dependent on the availability of a large surface area for protein binding. The non-porous material used for the carrier offers a much reduced binding area compared to conventional chromatographic adsorbents. However, we have found that the short contact time between the belt and the adsorption and desorption media allowed rapid recycling of the affinity ligand which more than compensates for the apparent low binding surface area. Indeed, in the method of Hughes and Charm discussed earlier, one belt cycle involving approximately 1 $\mu$mol of affinity ligand required 37 hours for 1 cycle giving a ligand recycle rate of 0.027 $\mu$mol/h. However, the non-particulate carrier of the present invention, which was of much lower surface area, carried only 0.0075 $\mu$mol of ligand but the belt cycle time was only 114 seconds, giving a ligand recycle rate of 0.24 $\mu$mol/h. This is almost ten times greater than that achieved by the prior art method of Hughes and Charm. This feature can enable the separation of a large amount of the target protein relative to the amount of ligand used. The expense of the ligand is often a limitation to the application of affinity chromatography, particularly for the purification of low value/high-volume products. Rapid ligand recycling may make affinity separations feasible on a wider scale.

## REFERENCES

Andrews, A.T. and Mbafor, W. (191) Immobilisation of enzymes to nylon film. Biochem. Soc. Trans. 19, 271S.

Burns, M.A. and Graves, D.J. (1985) Continuous affinity chromatography using a magnetically stabilized fluidized bed. Biotechnol. Progress 1, 95-103.

Dwyer, J.L. (1984) Scale-up of bioproduct separation with higher performance liquid chromatography. Bio/technology 2, 957-964.

Haverback, B.J., Dyce, B., Bundy, H. and Edmondson, H.A. (1960) Trypsin, trypsinogen and trypsin inhibitor in human pancreatic juice. Am. J.Med. 29, 424-433.

Huang, S.Y., Lin, C.K., Chang, W.H. and Lee, W.S. (1986) Enzyme purification and concentration by simulated moving bed chromatography: an experimental study. Chem. Eng. Commun. 45, 291-309.

Hughes, J.J. and Charm, S.E. (1979) Method for continuous purification of biological material using immunosorbent. Biotech. Bioeng. 21, 1439-1455.

Nicoud, R.M. (1992) The simulated moving bed: a powerful chromatographic process. LC.GC International 5 (5), 43-47.

Pungor, E., Afeyan, N.B., Gordon, N.F. and Cooney, C.L. (1987) Continuous affinity-recycle extraction: a novel protein separation technique. Bio-technology 5, 604-608.

Sussman, M.V. (1976) Continuous chromatography. Chemtech. April, 260-264.

**Claims**

1. Apparatus for the continuous separation and purification of a material comprising a non-particulate carrier which is adapted to reversibly bind a desired material and a plurality of liquid containers through which the carrier is arranged to pass sequentially.

2. Apparatus according to claim 1, wherein the carrier is an endless belt.

3. Apparatus according to claim 1 or 2 wherein an agent which is capable of reversibly binding the desired material is chemically attached to the carrier.

4. Apparatus according to claim 1 or 2 wherein the carrier is coated with a material to which an agent which is capable of reversibly binding the desired material is chemically attached.

5. Apparatus according to claim 3 or 4, wherein the agent is attached to the carrier or the coating material by a chemical spacer.

6. Apparatus according to any of the preceding claims, wherein the carrier is a natural or synthetic polymer.

7. Apparatus according to claim 6, wherein the carrier is nylon.

8. A method for the continuous separation and purification of a material comprising providing a non-particulate carrier which is adapted to reversibly bind a desired material to be purified and passing the carrier suquentially through a feedstock liquid containing at least one material to be purified, where the desired material is adsorbed to the carrier, a wash liquid, at least one desorption liquid into which the material is desorbed by the carrier and a further wash liquid.

9. The method of claim 8, wherein a plurality of desired materials are adsorbed to the carrier from the feedstock liquid and a plurality of desorption liquids are provided for specific desorption of each of the materials adsorbed.

10. A non-particulate carrier which is adapted to reversibly bind a material for use in the apparatus of claim 1.

11. A non-particulate carrier which is adapted to reversibly bind a material for use in the method of claim 7.

**FIGURE 1**

**FIGURE 2**

**European Patent Office**

**EUROPEAN SEARCH REPORT**

Application Number

EP 94 30 0573

## DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| X | WO-A-91 03297 (SARTORIUS)<br>* page 12, line 11 - page 13, line 18 *<br>* page 15, line 10 - page 18, line 4 *<br>--- | 1-8 | B01D15/02<br>B01J47/12 |
| X | WO-A-91 03317 (SARTORIUS)<br><br>* page 13 - page 15; claims 1-14 *<br>--- | 3-7,10,<br>11 | |
| A | GB-A-2 192 403 (G.E.JOWETT)<br>* page 3, line 83 - page 4, line 11 * | 1-6,8 | |
| X | * page 1, line 97 - line 120 *<br>----- | 10 | |
| | | | TECHNICAL FIELDS SEARCHED (Int.Cl.5)<br><br>B01D<br>B01J |

The present search report has been drawn up for all claims

| Place of search | Date of completion of the search | Examiner |
|---|---|---|
| THE HAGUE | 19 May 1994 | Wendling, J-P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)